# EUROPEAN PATENT SPECIFICATION

(11) **EP 3 531 295 B1**
(45) Date of publication and mention of the grant of the patent: **04.11.2020**
(21) Application number: 17867286.1
(22) Date of filing: 07.09.2017
(51) Int. Cl.: G06F 13/00, H04M 1/00, H04Q 9/00, H04L 29/08, G06F 9/445, H04L 12/24, H04L 12/18, H04L 12/28

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS ET PROGRAMME

(30) Priority: 01.11.2016 JP 2016214447
(43) Date of publication of application: 28.08.2019
(73) Proprietor: Sony Corporation, Tokyo 108-0075 (JP)
(72) Inventor: NAGASAKA, Hideo, Tokyo 108-0075 (JP); KUSUMOTO, Katsutoshi, Tokyo 108-0075 (JP); TANAKA, Makoto, Tokyo 108-0075 (JP)
(74) Representative: MFG Patentanwälte Meyer-Wildhagen Meggle-Freund Gerhard PartG mbB
(86) International application number: PCT/JP2017/032312
(87) International publication number: WO 2018/083880

(56) References cited:
- EP-A1- 2 090 981
- EP-A1- 2 661 050
- JP-A- 2004 102 671
- JP-A- 2015 167 021
- JP-A- 2016 032 119
- JP-A- 2016 533 604
- US-A1- 2014 068 467

## Description

### Technical Field

The present disclosure relates to an information processing apparatus, an information processing method, and a program.

### Background Art

In Patent Literature 1, a technique of duplicating an application that has been installed (loaded) on one mobile terminal in another mobile terminal is disclosed. Patent Literature 2 discloses a method of providing an instant messaging service and multiple services expanded from the instant messaging service, the method including displaying a chat window for a chat room related to an instant messaging service, receiving a touch event input by a user on the chat window, selecting one service among a plurality of services expanded from the instant messaging service in response to the touch event, and displaying a window related to the selected service. Patent Literature 3 describes a software maintenance system for managing a software distribution system for distributing a software package to one or more target machines. Patent Literature 4 relates to a metering infrastructure configured for automated meter reading, such as of utility (electric, natural gas, etc.) meters.

### Citation List

### Patent Literature

Patent Literature 1: JP 2010-198473 A
Patent Literature 2: US 2014/068467 A1
Patent Literature 3: EP 2090981 A1
Patent Literature 4: EP 2661050 A1

### Disclosure of Invention

### Technical Problem

However, for example, by reason that a user of the other mobile terminal does not have adequate literacy or the like, there has been a case in which the application is not installed on the other mobile terminal smoothly. Therefore, a technique that enables smoother installation of an application on an information terminal, such as a mobile terminal, has been desired.

Therefore, the present disclosure provides novel and improved information processing apparatus, information processing method, and program that enable smoother installation of an application on an information terminal.

### Solution to Problem

According to a first aspect the invention provides an information processing apparatus in accordance with claim 1. According to a second aspect the invention provides an information processing method in accordance with claim 12. According to a third aspect the invention provides a program in accordance with claim 13. Further aspects of the invention are set forth in the dependent claims, the drawings and the following description of embodiments. According to the present disclosure, there is provided an information processing apparatus including: a control unit configured to perform, in a case in which installation of an application is accepted by a first information terminal, application-installation prompt processing to prompt the installation of the application with respect to a second information terminal.

According to the present disclosure, there is provided an information processing method including, by a processor: performing, in a case in which installation of an application is accepted by a first information terminal, application-installation prompt processing to prompt the installation of the application with respect to a second information terminal.

According to the present disclosure, there is provided a program causing a computer to implement a control function of performing, in a case in which installation of an application is accepted by a first information terminal, application-installation prompt processing to prompt the installation of the application with respect to a second information terminal.

According to the present disclosure, in the case in which the first information terminal accepts installation of an application, the control unit performs application-installation prompt processing with respect to the second information terminal.

### Advantageous Effects of Invention

As described above, according to the present disclosure, in the case in which the first information terminal accepts installation of an application, the application-installation prompt processing is performed with respect to the second information terminal and, therefore, it becomes possible to install an application on the second information terminal more smoothly. Note that the information processing apparatus may include a plurality of devices as an information processing system. Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram showing an entire configuration of an information processing system according to a first embodiment of the present disclosure.
[FIG. 2] FIG. 2 is a block diagram showing an internal configuration of a managing apparatus (information processing apparatus) according to the embodiment.
[FIG. 3] FIG. 3 is a block diagram showing an internal configuration of an information terminal.
[FIG. 4] FIG. 4 is a sequence diagram showing an example of processing performed by the information processing system.
[FIG. 5] FIG. 5 is an explanatory diagram showing an example of a display image that is displayed on a display unit of the information terminal.
[FIG. 6] FIG. 6 is an explanatory diagram showing an example of a display image that is displayed on a display unit of the information terminal.
[FIG. 7] FIG. 7 is an explanatory diagram showing an example of a display image that is displayed on a display unit of the information terminal.
[FIG. 8] FIG. 8 is an explanatory diagram showing an entire configuration of an information processing system according to a second embodiment of the present disclosure.
[FIG. 9] FIG. 9 is an explanatory diagram showing an example of a display image that is displayed on a display unit of the information terminal.
[FIG. 10] FIG. 10 is an explanatory diagram showing an entire configuration of an information processing system according to a third embodiment of the present disclosure.
[FIG. 11] FIG. 11 is a block diagram showing an internal configuration of a managing apparatus.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be provided in the following order.
1. First Embodiment
1-1. Overall Configuration of Information Processing System
1-2. Overview of Processing by Information Processing System
1-3. Configuration of Managing Apparatus
1-4. Configuration of Information Terminal
1-5. Processing by Information Processing System
1-6. Various Modifications
1-6-1. First Modification
1-6-2. Second Modification
1-6-3. Third Modification
1-6-4. Fourth Modification
1-6-5. Fifth Modification
1-6-6. Sixth Modification
2. Second Embodiment
2-1. Overall Configuration of Information Processing System
2-2. Processing by Information Processing System
3. Third Embodiment
3-1. Overall Configuration of Information Processing System
3-2. Configuration of Managing Apparatus
3-3. Processing by Information Processing System

### <1. First Embodiment>

### (1-1. Overall Configuration of Information Processing System)

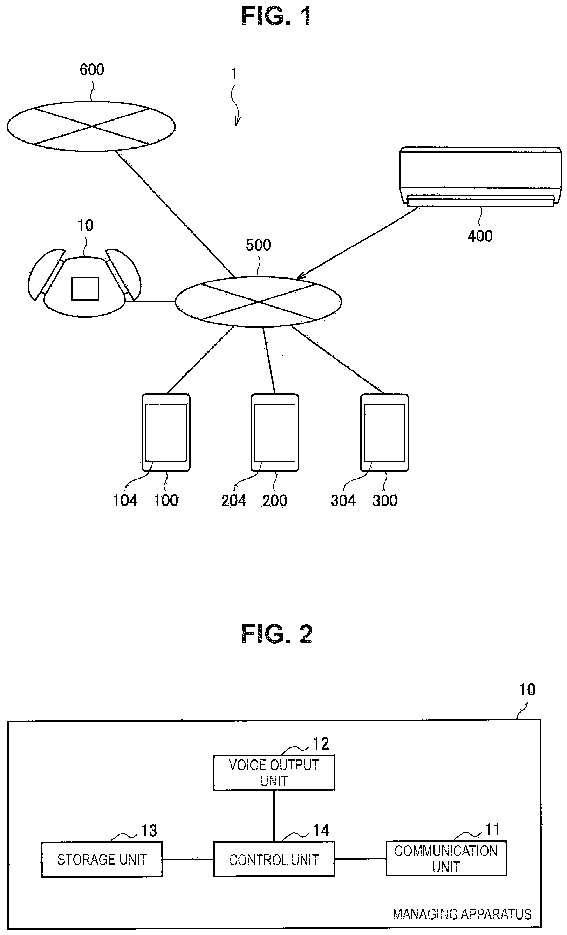

First, an overall configuration of an information processing system 1 according to a first embodiment will be described with reference to FIG. 1. The information processing system 1 includes a managing apparatus (information processing apparatus) 10, a plurality of information terminals 100 to 300, and a network 500. The information processing system 1 is installed in, for example, one home. The installation location of the information processing system 1 is, of course, not limited thereto. In the first embodiment, in the case in which a new device 400 (for example, air conditioning system) is installed in a network 500, an application supporting the device 400 can be smoothly installed on the information terminals 100 to 300.

The network 500 is a so-called home network, and various devices (more specifically, devices capable of communication through the network 500) in the home are connected. In the example shown in FIG. 1, the managing apparatus 10 and the information terminals 100 to 300 are connected to the network 500. The network 500 is connected to still another external information processing apparatus and the like through another network 600 not shown. The external information processing apparatus includes, for example, an information processing apparatus capable of providing various kinds of applications. The network 500 is, of course, not limited to a home network. For example, the network 500 may be a network constituting a cloud computing system.

In the case in which a new device (for example, air conditioning system 400) is connected to the network 500, the managing apparatus 10 detects the device. Subsequently, the managing apparatus 10 searches for an application that supports the new device on the network 600. The managing apparatus 10 performs processing to load (that is, install) the acquired application on the information terminals 100 to 300. Details are described later, but the managing apparatus 10 requests the information terminal 100 (first information terminal) to accept installation of the application. Subsequently, the managing apparatus 10 performs application-installation prompt processing to install the application on the information terminals 200, 300 (second information terminal) in the case in which the information terminal 100 accepts installation of the application. For example, the managing apparatus 10 causes the information terminals 200, 300 to display an image to guide a user of the information terminals 200, 300 to install the application. Here, the application is also installed in the information terminal 100 in the first embodiment. Therefore, it is determined that the information terminal 100 has accepted the installation of the application in the case in which the information terminal 100 installs the application.

The information terminals 100 to 300 are devices that are connected to the network 500 and carried by different users, respectively. Specifically, the information terminals 100 to 300 are smartphones. The information terminals 100 to 300 are, of course, not limited to smartphones, but may also be smart tablets, mobile phones, or the like. The information terminals 100 to 300 may be stationary devices, but are preferable to be user-portable devices. The user of the information terminal 100 (first user) (hereinafter, also referred to as "user A") has adequate literacy. The user of the information terminal 200 (second user) (hereinafter, also referred to as "user B") and the user of the information terminal 300 (second user) (hereinafter, also referred to as "user C") have inadequate literacy. As an example, users A to C are family, and the user A is father, the user B is mother, and the user C is a child. Assume that the user A has administrative authority of the information terminals 200, 300. The user A is, of course, not required to have the administrative authority of the information terminals 200, 300. Note that at least one out of the information terminal 100, the information terminal 200, and the information terminal 300 may be configured to authenticate a corresponding user out of the user A, the user B, and the user C. For the user authentication, various kinds of authentication methods may be adopted. As examples of the authentication method, various kinds of authentication methods (personal authentication), such as direct information acquisition by password input and the like, fingerprint authentication, iris authentication or face authentication by image recognition, voice authentication by determining voice print and the like, biometric authentication by sensing biological reactions, may be adopted. It is preferable that these authentication methods be performed in an information terminal (the information terminal 100 herein) to which at least administrative authority is given in the viewpoint of security.

### (1-2. Overview of Processing by Information Processing System)

Next, an overview of processing by the information processing system 1 will be described. The overview of the processing will be described herein with a case in which the new device 400 (air conditioning system herein) is connected to the network 500 by way of example.

The managing apparatus 10 monitors the network 500, and detects that the new device 400 is connected. In the case in which the new device 400 is detected, the managing apparatus 10 may notify the user A of the fact. For example, the managing apparatus 10 may output a voice saying that "An air conditioning system is detected". Subsequently, the managing apparatus 10 searches for an application supporting the device 400 on the network 600. Subsequently, the managing apparatus 10 requests the information terminal 100 to accept installation of the application. In response thereto, the information terminal 100 displays an image to prompt for installation of the application. The user A sees the image and determines whether or not to install the application. In the case in which the application is to be installed, the user A performs an input operation for application installation. The information terminal 100 installs the application on the basis of the input operation by the user A. The information terminal 100 transmits an indication to the effect that installation of the application is accepted, to the managing apparatus 10 in the case in which the application is installed. The managing apparatus 10 performs application-installation prompt processing to install the application on the information terminals 200, 300 in the case in which the information terminal 100 accepts installation of the application. For example, the managing apparatus 10 causes the information terminals 200, 300 to display an image to guide the users B, C to install the application on the information terminals 200, 300. The users B, C install the application on the information terminals 200, 300, viewing this display image. The information terminals 200, 300 notifies the managing apparatus 10 of the result.

As described, the information processing system 1 performs application-installation prompt processing to install an application on the information terminals 200, 300 in the case in which the information terminal 100 accepts installation of the application. Therefore, the application can be installed smoothly by the information terminals 200, 300.

Particularly, in the present embodiment, the processing of guiding the users B, C to install the application is performed and, therefore, the application can be installed on the information terminals 200, 300 smoothly even in the case in which literacy of the users is not adequate. For example, even in the case in which the users B, C do not know an installation method of the application, the application can be installed smoothly on the information terminals 200, 300.

### (1-3. Configuration of Managing Apparatus)

Next, a configuration of the managing apparatus 10 will be described with reference to FIG. 2. The managing apparatus 10 includes a communication unit 11, a voice output unit 12, a storage unit 13, and a control unit 14. Note that such a configuration can be implemented by a hardware configuration with a processor, a memory, a communication device, a speaker, and the like. The processor may include, for example, a central processing unit (CPU), a graphics processing unit (GPU), a digital signal processor (DSP), a system-on-a-chip (SoC), or the like. The memory may include, for example, a random access memory (RAM), a read-only memory (ROM), or the like. The processor implements respective functions described in the following by reading and executing a program stored in the memory.

The communication unit 11 includes, for example, a communication device, and the like, and communicates with various kinds of information terminals, for example, the information terminals 100 to 300, through the networks 500, 600. Moreover, in the case in which the device 400 is connected to the network 500, the communication unit 11 communicates also with the device 400 like this.

The voice output unit 12 includes, for example, a speaker and the like, and outputs various kinds of voices, controlled by the control unit 14. The storage unit 13 includes, for example, a memory and the like, and stores information, for example, a program and the like, necessary for processing of the managing apparatus 10.

The control unit 14 includes, for example, a processor and the like. The control unit 14 performs the following processing, in addition to controlling components of the managing apparatus 10. That is, the control unit 14 monitors the network 500, and detects connection of the new device 400 (for example, air conditioning system). In the case in which the new device 400 is detected, the control unit 14 searches for a supporting application on the network 600. In the case in which the application is found, the control unit 14 requests the information terminal 100 to accept installation of the application. In the case in which the information terminal 100 accepts installation of the application, the control unit 14 performs the application-installation prompt processing to have the information terminals 200, 300 install the application. For example, the control unit 14 performs processing of guiding the users B, C of the information terminals 200, 300 to install the application.

### (1-4. Configuration of information terminal)

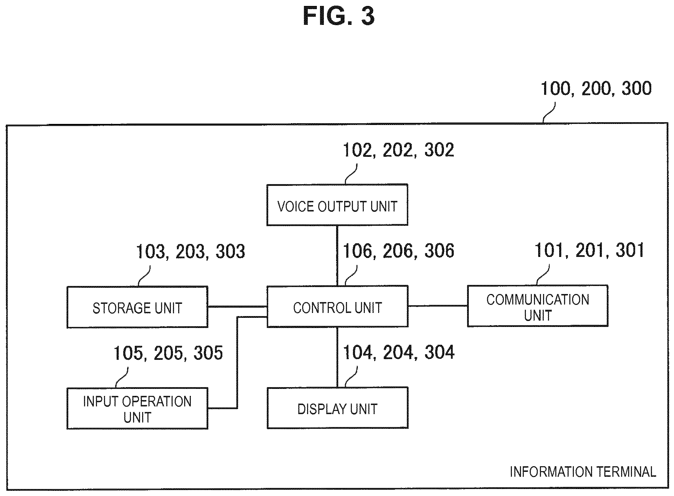

Next, configurations of the information terminals 100 to 300 will be described with reference to FIG. 3. Note that the information terminals 200, 300 have configurations in common with the configuration of the information terminal 100 and, therefore, the configuration of the information terminal 100 will be described herein.

The information terminal 100 includes a communication unit 101, a voice output unit 102, a storage unit 103, a display unit 104, an input operation unit 105, and a control unit 106. Note that such a configuration can be implemented by a hardware configuration with a processor, a memory, a communication device, a touch panel, a display panel, a speaker, and the like. The processor may include, for example, a central processing unit (CPU), a graphics processing unit (GPU), a digital signal processor (DSP), a system-on-a-chip (SoC), or the like. The memory may include, for example, a random access memory (RAM), a read-only memory (ROM), a flash memory, or the like. The processor implements respective functions described in the following by reading and executing a program stored in the memory.

The communication unit 101 includes, for example, a communication device, and the like, and communicates with the managing apparatus 10, and the information terminals 200, 300, through the network 500. Moreover, the communication unit 101 may communicate with still another information processing apparatus through the networks 500, 600.

The voice output unit 102 includes, for example, a speaker and the like, and outputs various kinds of voices, controlled by the control unit 106. The storage unit 103 includes, for example, a memory and the like, and stores information, for example, a program and the like, necessary for processing of the information terminal 100. The display unit 104 includes, for example, a display panel and the like, and displays various kinds of images, controlled by the control unit 106. The input operation unit 105 includes, for example, a touch panel, a button, and the like, and outputs input operation information input by a user to the control unit 106. The control unit 106 performs display of various kinds of images, installation of an application, and the like on the basis of information provided by the managing apparatus 10. In addition to controlling the components of the information terminal 100.

The information terminal 200 includes a communication unit 201, a voice output unit 202, a storage unit 203, a display unit 204, and a control unit 206. The information terminal 300 includes a communication unit 301, a voice output unit 302, a storage unit 303, a display unit 304, and a control unit 306. These components are similar to those of the information terminal 100, and are implemented by a hardware configuration similar to that of the information terminal 100.

### (1-5. Processing by Information Processing System)

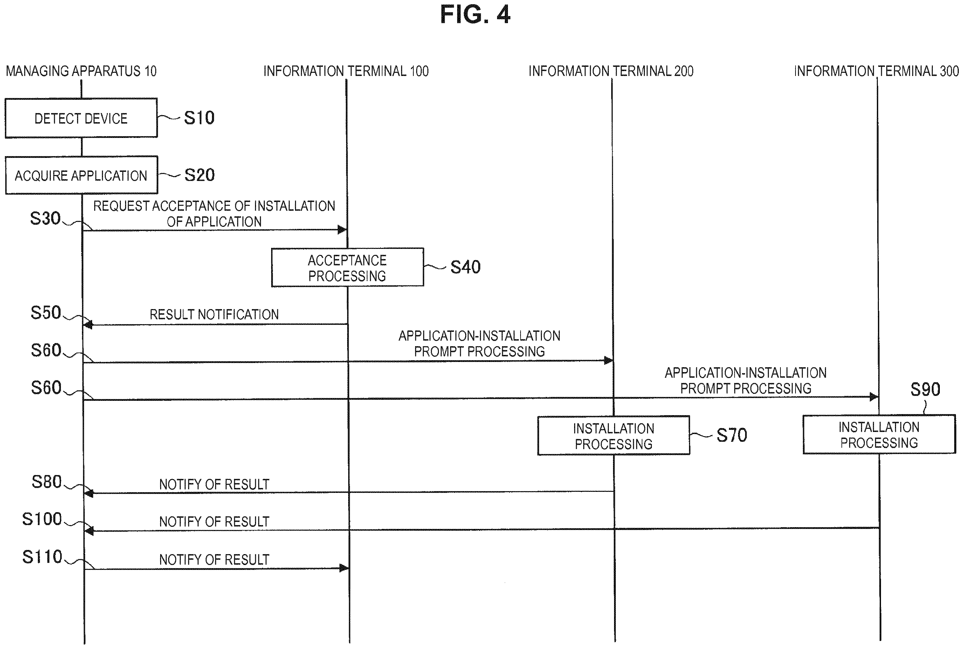

Next, processing by the information processing system 1 will be described in detail with reference to a sequence diagram shown in FIG. 4. Note that processing performed in the case in which the new device 400 (air conditioning system herein) is connected to the network 500 will be described in the following description.

At step S10, the control unit 14 of the managing apparatus 10 monitors the network 500, and detects that the new device 400 is connected to the network 500. Here, in the case in which the new device 400 is detected, the control unit 14 may notify the users A to C of the fact. For example, the control unit 14 may output a voice saying that "An air conditioning system is detected" from the voice output unit 12.

At step S20, the control unit 14 searches for an application supporting the device 400 on the network 600. The control unit 14 may search for a plurality of applications. In this case, the control unit 14 may create a list of applications. Moreover, in the case in which an application is found, the control unit 14 may notify the users A to C of the fact. For example, the control unit 14 may output a voice saying that "A supporting application is found" from the voice output unit 12. Furthermore, the control unit 14 may notify the users A to C of functions of the application. For example, the control unit 14 may output a voice saying that "If you install this application, you will be able to ..." from the voice output unit 12. The control unit 14 may transmit the information to the information terminals 100 to 300, particularly, to the information terminal 100. The information terminals 100 to 300 may display the information as an image. Furthermore, the information terminals 100 to 300 may output the information in voice. Moreover, the control unit 14 may consider tastes and preferences of the users A to C, a use environment of the device 400, and the like at the time of searching an application. For example, in the case in which the user A has a strong tendency to configure devices precisely, an application in which settings can be precisely adjusted may be searched.

At step S30, the control unit 14 requests the information terminal 100 to accept installation of the application. For example, the control unit 14 generates acceptance request information that includes information relating to a designation of the device 400, a location of the application, a list of application, and the like, to output to the communication unit 11. The communication unit 11 transmits the acceptance request information to the information terminal 100.

At step S40, the information terminal 100 performs acceptance processing. Specifically, the communication unit 101 of the information terminal 100 receives the acceptance request information, to output to the control unit 106. The control unit 106 inquires of the user A whether or not to accept installation of the application on the basis of the acceptance request information.

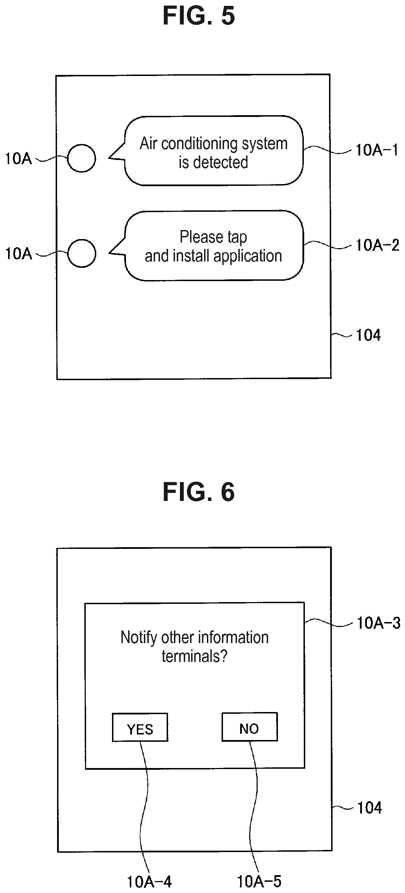

For example, the control unit 106 displays an image shown in FIG. 5. Specifically, the control unit 106 first displays an icon 10A indicating the managing apparatus 10 and a message 10A-1 saying that "Air conditioning system is found" on the display unit 104, associating with each other. Thus, the control unit 106 notifies the user A that the device 400 has been detected. Subsequently, the control unit 106 displays the icon 10A and a message 10A-2 saying that "Please tap and install application" on the display unit 104, associating with each other. Thus, the control unit 106 prompts the user A to install the application. That is, it is regarded that installation of an application has been accepted in the case in which the application is installed on the information terminal 100 in the first embodiment.

The user A taps the message 10A-2 in the case in which the user A wishes to install the application on the information terminal 100. In response to this, the control unit 106 accesses a homepage at which the application is located, and displays the relevant homepage on the display unit 104. In the case in which a plurality of applications is present, the control unit 106 may display a list of applications. The control unit 106 then accesses a homepage at which an application tapped by the user is located. The user A performs an input operation (for example, tapping a "install" button) to install the application, referring to description of the homepage. In accordance to this, the control unit 106 downloads the application and, further, performs installation. Thereafter, the control unit 106 displays an image or outputs a voice indicating that installation of the application has been succeeded. Note that the control unit 106 may display a cancel button not shown on the display unit 104. Furthermore, in the case in which the user A taps the cancel button, the control unit 106 may determine not to accept installation of the application.

At step S50, the control unit 106 performs result notification. Specifically, the control unit 106 generates result notification information indicating that installation of the application is accepted in the case in which the application has been installed. The control unit 106 generates result notification information indicating that installation of the application is not accepted in the case in which the user has tapped the cancel button. The control unit 106 outputs the generated result notification information to the communication unit 101, and the communication unit 101 transmits the result notification information to the managing apparatus 10.

The communication unit 11 of the managing apparatus 10 receives the result notification information, to output to the control unit 14. The control unit 14 determines whether or not installation of the application has been accepted on the basis of the result notification information. In the case in which the control unit 14 determines that installation of the application has not been accepted, the control unit 14 ends this process. In the case in which installation of the application has been accepted, the control unit 14 inquires of the information terminal 100 whether or not to perform the application-installation prompt processing with respect to the information terminals 200, 300. Specifically, the control unit 14 generates inquiry information, to output to the communication unit 11. The communication unit 11 transmits the inquiry information to the information terminal 100. The communication unit 101 of the information terminal 100 receives the inquiry information, to output to the control unit 106. The control unit 106 inquires of the user A whether or not to perform the application-installation prompt processing with respect to the information terminals 200, 300.

Specifically, the control unit 106 displays an inquiry image 10A-3 shown in FIG. 6 on the display unit 104. The inquiry image 10A-3 includes text information indicating that "Notify other information terminals?", a "YES" button 10A-4, and a "NO" button10A-5. The text information has content to inquire whether or not to perform the application-installation prompt processing with respect to the information terminals 200, 300.

In the case in which the user A wishes to install the application also on the information terminals 200, 300, the user A taps the "YES" button 10A-4. In the case in which it is determined that it is not necessary to install the application on the information terminals 200, 300, the user A taps the "NO" button 10A-5. It is assumed that there is a case in which management of the device 400 is desired to be done only by the user A depending on a type of the device 400. In another case, it is assumed that the application is for a private use of the user A. In these cases, it is sufficient if the user A taps the "NO" button 10A-5.

In the case in which the user A has tapped the "YES" button 10A-4, the control unit 106 determines to perform the application-installation prompt processing with respect to the information terminals 200, 300. On the other hand, in the case in which the user A has tapped the "NO" button 10A-5, the control unit 106 determines not to perform the application-installation prompt processing with respect to the information terminals 200, 300. The control unit 106 generates response information relating to a determination result, to output to the communication unit 101. The communication unit 101 transmits the response information to the managing apparatus 10. The communication unit 11 of the managing apparatus 10 receives the response information, to output to the control unit 14.

The control unit 14 determines whether or not to perform the application-installation prompt processing with respect to the information terminals 200, 300 on the basis of the response information. In the case in which the control unit 14 determines that the application-installation prompt processing is not to be performed with respect to the information terminals 200, 300, the control unit 14 ends this process. In the case in which it is determined to perform the application-installation prompt processing is to be performed with respect to the information terminals 200, 300, the control unit 14 performs the application-installation prompt processing.

The application-installation prompt processing is processing to guide the users B, C to install the application. This enables to install the application on the information terminals 200, 300 smoothly even if the users B, C do not have adequate literacy.

Specifically, at step S60, the control unit 14 generates application-installation prompt information including information indicating that the application has been accepted, a location of the application, and the like, to output to the communication unit 11. The communication unit 11 transmits the application-installation prompt information to the information terminals 200, 300.

At step S70, the information terminal 200 performs following installation processing. That is, the communication unit 201 of the information terminal 200 receives the application-installation prompt information, to output to the control unit 206. The control unit 206 guides the user B to install the application on the basis of the application-installation prompt information.

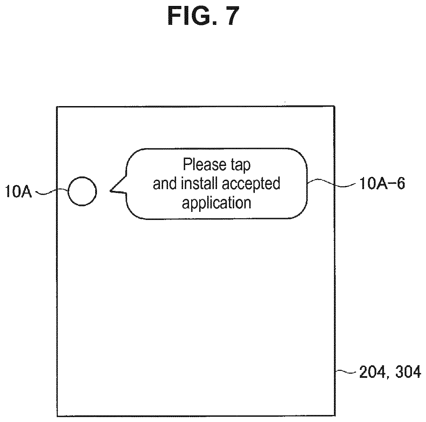

For example, the control unit 206 displays an image shown in FIG. 7. Specifically, the control unit 206 displays the icon 10A indicating the managing apparatus 10 and a message 10A-6 saying that "Please tap and install accepted application", associating with each other. The message 10A-6 is a message to guide the user B to install the application. Here, the message 10A-6 indicates that the application has been accepted. Thus, the user B can determine that the application to be installed now is safe. To install the application, the user B taps the message 10A-6. On the other hand, in the case in which the application is not to be installed, the user B either ignores this message, or taps a cancel button not shown. In the case in which the message 10A-6 is tapped, the control unit 206 downloads the application and, further, performs installation. Thereafter, the control unit 206 displays an image or outputs a voice indicating that installation of the application has been succeeded. Furthermore, the control unit 206 may display information (for example, designation or the like) to identify a user (the user A herein) that has given the acceptance, together with the image described above. In this case, the user B can easily grasp which user has given the acceptance.

At step S80, the information terminal 200 performs result notification. Specifically, the control unit 206 generates result notification information relating to whether or not the application is installed. The control unit 206 outputs the generated result notification information to the communication unit 201, and the communication unit 201 transmits the result notification information to the managing apparatus 10.

At steps S90 to S100, the information terminal 300 performs processing similar to those at steps S70 to S80.

At step S110, the managing apparatus 10 notifies the information terminal 100 of the result of the application-installation prompt processing. Specifically, the communication unit 11 of the managing apparatus 10 receives the result notification information transmitted from the information terminals 200, 300, to output to the control unit 14. The control unit 14 recognizes whether or not the application has been installed on the information terminals 200, 300 on the basis of the result notification information. Subsequently, the control unit 14 generates result notification information relating to a recognition result, to output to the communication unit 11. The communication unit 11 transmits the result notification information to the information terminal 100.

Here, in the case in which an information terminal on which the application is not installed is present, the control unit 14 may monitor the information terminal periodically. Moreover, in the case in which installation of the application is not seen, the control unit 14 may repeat the application-installation prompt processing with respect to the information terminal. Furthermore, in the case in which result notification information indicates that the application has been installed is transmitted from the information terminal, the control unit 14 may transmit result notification information indicating as such to the managing apparatus 10. Moreover, the control unit 14 may output an application installation state with respect to the information terminals 200, 300 in voice from the voice output unit 12. For example, the control unit 14 may output a voice saying that "The application has been installed on the information terminal 200. The application has not been installed on the information terminal 300" from the voice output unit 12. That is, the control unit 14 may notify the users A to C of a monitoring result. This enables not only the user A, but also the users B, C to be aware of whether or not the application has been installed on the information terminals 200, 300.

The communication unit 101 of the information terminal 100 receives the result notification information, to output to the control unit 106. The control unit 106 displays the result notification information on the display unit 104. The control unit 106 may output the result notification information in voice from the voice output unit 102. Thus, the user A can grasp whether or not the users B, C have installed the application on the information terminals 200, 300 easily. After installation of the application, the information terminals 100 to 300 execute the application appropriately. Note that in the case in which a plurality of applications has been installed, the information terminals 100 to 300 may display a list of applications in order according to frequency of use of the applications or the like.

As described, according to the first embodiment, the managing apparatus 10 requests the information terminal 100 to install an application. Furthermore, in the case in which the information terminal 100 accepts installation of the application, the managing apparatus 10 performs the application-installation prompt processing to install the application on the information terminals 200, 300. Thus, it is possible to install the application smoothly on the information terminals 100 to 300, particularly on the information terminals 200, 300. Moreover, for example, even if the user A forgets to instruct the users B, C to install the application, the users B, C can install the application on the information terminals 200, 300.

Furthermore, in the case in which the device 400 is connected to the network 500, the managing apparatus 10 requests the information terminal 100 to accept installation of an application relating to the device 400. Thus, it is possible to install the application relating to the device 400 smoothly on the information terminals 100 to 300, particularly on the information terminals 200 to 300. That is, according to the first embodiment, it is possible to install the Internet of Things (IoT) in home smoothly.

Moreover, in the case in which the device 400 is detected, the managing apparatus 10 notifies the users A to C that the device 400 is detected. Therefore, the users A to C can be aware of connection of the device 400 to the network 500 easily and, by extension, the application can be smoothly installed on the information terminals 100 to 300.

Furthermore, in the case in which the information terminal 100 accepts installation of an application, the managing apparatus 10 inquires of the information terminal 100 whether or not to perform application-installation prompt processing with respect to the information terminals 200, 300. Therefore, the user A can selectively install an application that is considered to be necessary for the users B, C on the information terminals 200, 300.

Moreover, the managing apparatus 10 monitors whether or not the information terminals 200, 300 have installed an application, and notifies the users A to C of a monitoring result. Thus, the users A to C can grasp whether or not the application has been installed on the information terminals 200, 300 easily.

Furthermore, when the application-installation prompt processing is performed, the managing apparatus 10 notifies the users B, C of the information terminals 200, 300 that the application has been accepted. Therefore, the users B, C can determine that the application to be installed now is safe. Thus, the users B, C can install the application on the information terminals 200, 300 more smoothly.

### (1-6. Various Modifications)

### (1-6-1. First Modification)

Next, various modifications of the first embodiment will be described. In the above description, the managing apparatus 10 performs all of detection of the device 400, requesting acceptance, and the application-installation prompt processing, but all or part of the processing may be performed by the information terminal 100. For example, the information terminal 100 may detect the device 400, and may request the user A to accept installation of an application. Moreover, the managing apparatus 10 may perform only the application-installation prompt processing. In this case, the control unit 14 of the information terminal 100 functions as a requesting unit that request acceptance of installation of an application. Furthermore, in the case in which the information terminal 100 accepts installation of the application, the control unit 106 performs the application-installation prompt processing to install the application on the information terminals 200, 300. In the case in which the information terminal 100 performs all of detection of the device 400, requesting acceptance, and the application-installation prompt processing, the managing apparatus 10 is not necessarily required. Therefore, in case that the managing apparatus 10 is disabled due to some reasons or the like, the information terminal 100 may perform the processing in place of the managing apparatus 10.

### (1-6-2. Second Modification)

Moreover, in the case in which a new or updated application as an application relating to the device 400 is found, the control unit 14 of the managing apparatus 10 may request the information terminal 100 to accept installation of the new or updated application. Thus, the managing apparatus 10 can suggest a new usage method or the like of the device 400 easily also to users that are not interested in the new and updated application, for example, the users B, C. Note that in the case in which a new or updated application is found, the control unit 14 may output the fact in voice from the voice output unit 12.

### (1-6-3. Third Modification)

Furthermore, the managing apparatus 10 is configured to cause the same application to be installed on the information terminals 100 to 300, but may be configured to cause different applications to be installed on information terminals 100 to 300, respectively. That is, the control unit 14 may determine an application subject to acceptance to an application specific to each of the information terminals 100 to 300.

For example, there is a case in which the user A desires to use the information terminal 100 as a viewer and the information terminal 200 as an imaging device. In this case, the managing apparatus 10 performs installation prompt processing of a first application and installation prompt processing of a second application with respect to the information terminal 100 and the information terminals 200, 300, respectively. Specifically, the control unit 14 of the managing apparatus 10 searches for the first application that causes the information terminal 100 to function as a viewer, and for the second application that causes the information terminal 200 to function as an imaging device. Subsequently, the control unit 14 requests the information terminal 100 to accept installation of the first application on the information terminal 100, and installation of the second application on the information terminal 200. Specifically, the control unit 14 generates acceptance request information that includes information relating to locations of the first and second applications, and information relating to installation destinations of these applications, to output to the communication unit 11. The communication unit 11 transmits the acceptance request information to the information terminal 100.

The communication unit 101 of the information terminal 100 receives the acceptance request information, to output to the control unit 106. The control unit 106 inquires of the user A whether or not to accept installation of the application on the basis of the acceptance request information. For example, the control unit 106 displays a message saying that "Please tap and install the first application" and a message saying that "Install the second application on the information terminal 200?" on the display unit 104. With the latter message, an "accept" button may be displayed. In the case in which the former message is tapped, the control unit 106 downloads the application to install. In the case in which the "accept" button is tapped, the control unit 106 transmits a result indicating as such to the managing apparatus 10. The managing apparatus 10 performs the application-installation prompt processing for the second application with respect to the information terminal 200. Thus, different applications can be installed on the information terminals 100, 200.

Moreover, an application enabling detailed settings may be installed on the information terminal 100 of the user A having adequate literacy. Furthermore, an application having minimum required functions may be installed on the information terminals 200, 300 of the users B, C having inadequate literacy.

### (1-6-4. Fourth Modification)

Furthermore, in the processing example described above, the processing of guiding the users B, C of the information terminals 200, 300 to install an application is performed as the application-installation prompt processing, but it may be configured to install an application automatically on the information terminals 200, 300. In this case, upon receiving application-installation prompt information, the control units 206, 306 of the information terminals 200, 300 download the application to install thereon. In this case, the application can be installed smoothly by the information terminals 200, 300. However, in this case, a case in which an application not intended by the users B, C is installed is assumed and, therefore, it may be configured to have the users B, C make a setting whether or not such processing is allowed to be performed. Note that, for example, also in the case in which either one of the information terminals 200, 300 is a terminal for a family, not belonging to an individual, the managing apparatus 10 may cause such a terminal for a family to automatically install an application thereon. Moreover, the managing apparatus 10 may cause all of the information terminals 100 to 300 to install the application automatically.

### (1-6-5. Fifth Modification)

Moreover, in the processing example described above, an application is shared among the information terminals 100 to 300, but it may be configured to share a setting change made by the user A with respect to an application with the information terminals 200, 300. In this case, in the case in which a user makes a setting change of an application, the control unit 106 of the information terminal 100 generates setting change information relating to details of the setting change, to output to the communication unit 101. The communication unit 101 transmits the setting change information to the managing apparatus 10. The communication unit 11 of managing apparatus 10 receives the setting change information, to output to the control unit 14.

The control unit 14 performs setting-change-application prompt processing to apply the change to the information terminals 200, 300 on the basis of the setting change information. Specifically, the control unit 14 outputs the setting change information relating to details of the setting change to the communication unit 11, and the communication unit 11 transmits the setting change information to the information terminals 200, 300. The communication units 201, 301 of the information terminals 200, 300 output the setting change information to the control units 206, 306. The control units 206, 306 display content of the setting change information on the display units 204, 304, or output in voice from the voice output units 202, 302. Both of these may be performed. Thus, the control units 206, 306 notify the users B, C of the details of the change. The control units 206, 306 may further notify the users B, C of an operating method necessary for the setting change. Thus, the users B, C can apply the changes to the application of the information terminals 200, 300 easily. Moreover, the control units 206, 306 may apply the changes to the application of the information terminals 200, 300 immediately.

### (1-6-6. Sixth Modification)

Furthermore, the control unit 14 may install an application on the device 400 itself, and may perform, in this case, the processing described above (requesting acceptance to install an application of the information terminal 100, and the like).

### (1-6-7. Seventh Modification)

There is a case that the user A searches for an application on a network by himself/herself and requests the information terminal 100 to install such an application. In the case in which the information terminal 100 accepts installation of the application, the control unit 14 of the managing apparatus 10 may perform the application-installation prompt processing to install such an application on the information terminals 200, 300. In this modification, in the case in which accepting installation of an application (specifically, having installed an application), the information terminal 100 transmits information relating to the application to the managing apparatus 10. It is sufficient if the managing apparatus 10 performs the application-installation prompt processing described above on the basis of the acquired information.

### <2. Second Embodiment>

### (2-1. Overall Configuration of Information Processing System)

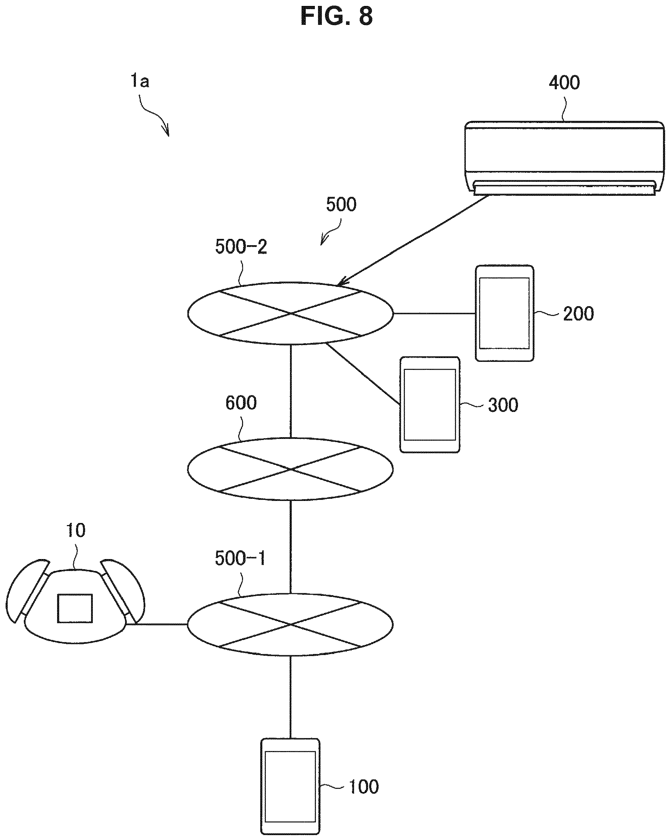

Next, a second embodiment of the present disclosure will be described. First, an overall configuration of an information processing system 1a according to the second embodiment will be described with reference to FIG. 8.

The information processing system 1a includes, similarly to the information processing system 1, the managing apparatus (information processing apparatus) 10 and the plurality of information terminals 100 to 300, and the network 500. However, the network 500 is divided into network groups 500-1, 500-2. The network groups 500-1, 500-2 are set up in different homes, respectively. Furthermore, the network groups 500-1, 500-2 are connected to each other through the network 600. The managing apparatus 10 and the information terminal 100 are connected to the network group 500-1 (first network group), and the information terminals 200, 300 are connected to the network group 500-2 (second network group). That is, the second embodiment assumes a case in which the user A having adequate literacy, and the users B, C having in adequate literacy belong to different families. In the second embodiment, in the case in which the device 400 is installed in a home of the users B, C having inadequate literacy, the user A is requested to accept installation of an application. Note that internal configurations of the managing apparatus 10 and the information terminals 100 to 300 are similar to those of the first embodiment.

### (2-2. Processing by Information Processing System)

Next, processing performed by the information processing system 1a will be described in detail with reference to a sequence diagram shown in FIG. 4. Note that processing performed in the case in which the new device 400 (air conditioning system herein) is connected to the network group 500-2 will be described in the following description.

At step S10, the control unit 14 of the managing apparatus 10 monitors the network group 500-2 through the network 600, and detects that the new device 400 has been connected to the network group 500-2. Here, in the case in which the new device 400 is detected, the control unit 14 may notify the user A of the fact. For example, the control unit 14 may output a voice saying that "An air conditioning system is detected" from the voice output unit 12.

At step S20, the control unit 14 searches for an application supporting the device 400 on the network 600. It is sufficient if specific processing details are similar to those of the first embodiment.

At step S30, the control unit 14 requests the information terminal 100 to accept installation of the application. For example, the control unit 14 generates acceptance request information that includes information relating to a designation of the device 400, a location of the network group in which the device 400 is found, a location of the application, a list of applications, and the like, to output to the communication unit 11. The communication unit 11 transmits the acceptance request information to the information terminal 100.

At step S40, the information terminal 100 performs acceptance processing. Specifically, the communication unit 101 of the information terminal 100 receives the acceptance request information, to output to the control unit 106. The control unit 106 inquires of the user A whether or not to accept installation of the application on the basis of the acceptance request information.

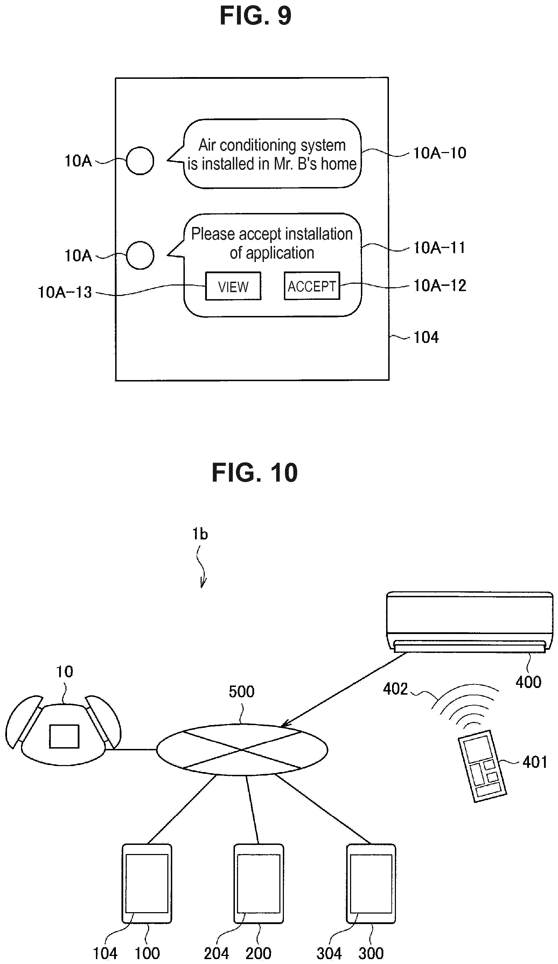

For example, the control unit 106 displays an image shown in FIG. 9. Specifically, the control unit 106 first displays the icon 10A indicating the managing apparatus 10 and a message 10A-10 saying that "Air conditioning system is installed in Mr. B's home" on the display unit 104, associating with each other. Thus, the control unit 106 notifies the user A that the device 400 has been connected to the network group 500-2. Subsequently, the control unit 106 displays the icon 10A and a message 10A-11 saying that "Please accept installation of the application" on the display unit 104, associating with each other. Furthermore, the control unit 106 displays an "accept" button 10A-12 and a "view" button 10A-13 in the message 10A-11. Thus, the control unit 106 prompts the user A to accept installation of the application.

To accept installation of the application, the user A taps the "accept" button 10A-12. In the case in which the user A wishes to view details of the application, the user A taps the "view" button 10A-13. In the case in which the "view" button 10A-13 is tapped, the control unit 106 displays detailed information of the application on the display unit 104. Here, it is sufficient if the control unit 106 acquires the detailed information of the application from a homepage at which the application is available.

Note that the control unit 106 may display a not shown cancel button or a "not accept" button on the display unit 104. Accordingly, in the case in which the user A does not accept installation of the application, the user A taps the cancel button or the "not accept" button.

At step S50, the control unit 106 performs a result notification. Specifically, the control unit 106 generates result notification information indicating whether or not installation of the application has been accepted. The control unit 106 outputs the generated result notification information to the communication unit 101, and the communication unit 101 transmits the result notification information to the managing apparatus 10.

The communication unit 11 of the managing apparatus 10 receives the result notification information, to output to the control unit 14. The control unit 14 determines whether or not installation of the application has been accepted on the basis of the result notification information. In the case in which it is determined that installation of the application has not been accepted, the control unit 14 ends this process. In the case in which installation of the application has been accepted, the control unit 14 determines to perform the application-installation prompt processing with respect to the information terminals 200, 300. Thereafter, the information processing system 1a performs processing similar to that at step S60 and later of the first embodiment.

According to the second embodiment, even in the case in which a network group to which the device 400 is connected and a network group to which the information terminal 100 that performs an accepting operation differ from each other, an application can be installed on the information terminals 200, 300 smoothly.

Note that the first embodiment and the second embodiment may be combined. That is, in the case in which the device 400 is connected to the network group 500-1, the processing of the first embodiment is performed. Note that in this case, to the network group 500-1, an information terminal subject to installation of an application is connected. Moreover, in the case in which the device 400 is connected to the network group 500-2, the processing of the second embodiment may be performed.

### <3. Third Embodiment>

### (3-1. Overall Configuration of Information Processing System)

Next, a third embodiment of the present disclosure will be described. First, an overall configuration of an information processing system 1b according to the third embodiment will be described with reference to FIG. 10. The information processing system 1b includes the managing apparatus (information processing apparatus) 10, the plurality of information terminals 100 to 300, and the network 500. The information processing system 1 is installed in, for example, one home. Therefore, the overall configuration is similar to that of the first embodiment. However, the managing apparatus 10 is capable of recognizing infrared information, for example, infrared information 402 that is output from a remote controller 401. The remote controller 401 is a device to remotely operate the device 400 (air conditioning system 400 herein). In the third embodiment, in the case in which the new device 400 is installed in the network 500, an application supporting the device 400 can be smoothly installed on the information terminals 100 to 300.

### (3-2. Configuration of Managing Apparatus)

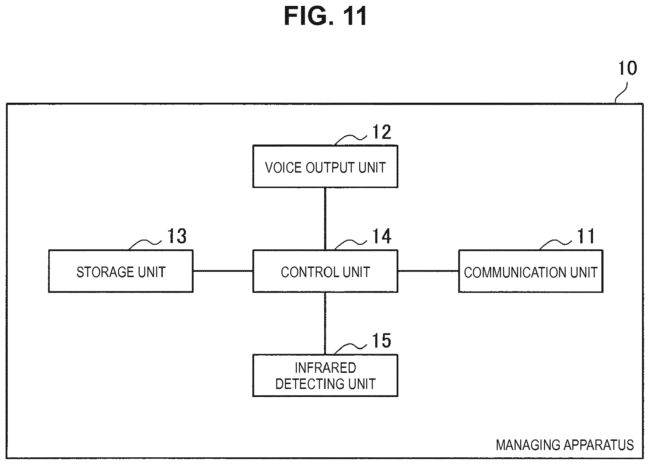

Next, a configuration of the managing apparatus 10 will be described with reference to FIG. 11. The managing apparatus 10 includes the communication unit 11, the voice output unit 12, the storage unit 13, the control unit 14, and an infrared detecting unit 15. That is, the managing apparatus 10 according to the third embodiment is what is obtained by adding the infrared detecting unit 15 to the managing apparatus 10 according to the first embodiment. Such a configuration can be implemented by a hardware configuration with a processor, a memory, a communication device, a speaker, an infrared detector device, and the like. The processor may include, for example, a central processing unit (CPU), a graphics processing unit (GPU), a digital signal processor (DSP), a system-on-a-chip (SoC), or the like. The memory may include, for example, a random access memory (RAM), a read-only memory (ROM), or the like. The processor implements respective functions described in the following by reading and executing a program stored in the memory.

Functions of the communication unit 11, the voice output unit 12, and the storage unit 13 are similar to those of the first embodiment. The infrared detecting unit 15 includes, for example, an infrared detector device, and detects various kinds of infrared information output, for example, from the remote controller 401, to output to the control unit 14.

### (3-3. Processing by Information Processing System)

Next, processing performed by the information processing system 1b will be described in detail on the basis of a sequence diagram shown in FIG. 4. Note that processing performed in the case in which the new device 400 (air conditioning system herein) is connected to the network 500 will be described in the following description.

At step S10, the control unit 14 of the managing apparatus 10 may detect the device 400 on the basis of infrared information given by the infrared detecting unit 15. The control unit 14 may monitor the network 500, and detect that the new device 400 is connected to the network group 500-2. That is, the first and third embodiments may be combined. Thereafter, the information processing system 1b, thereafter, the first information processing system 1b performs processing similar to that at step S20 and later of the first embodiment.

According to the third embodiment, the managing apparatus 10 can install an application on the information terminals 100 to 300 smoothly even in the case in which the users A to C use the remote controller 401. Note that in this case, there is a case the users A to C, especially, the users B, C are not interested in operating the device 400 through an application in some cases. Therefore, it is preferable that the managing apparatus 10 notify, in the case in which an application is detected, the users A to C of the fact in voice. Moreover, it is preferable that the control unit 14 notify the users A to C of functions of the application in voice. Thus, it is possible to increase interest of the users A to C in the application. Furthermore, in the case in which the device 400 is found by infrared information from the remote controller 401, the control unit 14 may output the fact in voice. Moreover, the control unit 14 may cause the information terminals 100 to 300 to display a list of devices found by infrared information. Furthermore, at that time, an applicable application may be displayed together. Moreover, the control unit 14 may operate the device 400 on the basis of infrared information or a voice from the users A to C.

Note that the second embodiment and the third embodiment may be combined. For example, the processing of the second embodiment may be performed in the case in which the device 400 is connected to the network group 500-2, and the processing of the third embodiment may be performed in the case in which the device 400 is connected to the network group 500-1.

The preferred embodiment(s) of the present disclosure has/have been described above with reference to the accompanying drawings, whilst the present disclosure is not limited to the above examples.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Reference Signs List

- 1, 1a, 1b: information processing system
- 10: managing apparatus
- 11: communication unit
- 12: voice output unit
- 13: storage unit
- 14: control unit
- 15: infrared detecting unit
- 100, 200, 300: information terminal
- 101,201,301: communication unit
- 102, 202, 302: voice output unit
- 103, 203, 303: storage unit
- 104, 204, 304: display unit
- 105, 205, 305: input operation unit
- 106, 206, 306: control unit
- 400: device
- 500: network
- 500-1, 500-2: network group

## Claims

1. An information processing apparatus (10) connected to a network (500), the information processing apparatus (10) comprising:
a control unit (14) configured to perform, in a case in which installation of an application is accepted by a first information terminal (100) connected to the network (500), application-installation prompt processing to prompt the installation of the application with respect to a second information terminal (200, 300) connected to the network (500),
wherein the control unit (14) is configured to:
be capable, in a case in which a new device (400) connectable to the network (500) is connected to the network (500), of detecting the new device (400), and requests the first information terminal (100) to accept the installation of the application relating to the new device (400) in a case in which the new device (400) is detected, and
perform, in the case in which the new device (400) is detected, a control of notifying at least one of the first information terminal (100) or the second information terminal (200, 300) that the new device (400) is detected.

2. The information processing apparatus (10) according to claim 1,
wherein the network (500) includes a first network group (500-1) and a second network group (500-2),
the first information terminal (100) is connected to the first network group (500-1),
the second information terminal (200, 300) is connected to the second network group (500-2), and
the control unit (14) is configured to detect the new device (400) in a case in which the new device (400) is connected to the second network group (500-2), and requests the first information terminal (100) to accept the installation of the application relating to the new device (400).

3. The information processing apparatus (10) according to claim 1 or 2,
wherein the control unit (14) is configured to search for an application relating to the new device (400) on another network (600), and in a case in which a new or updated application is found as the application relating to the new device (400), the control unit (14) is configured to request the first information terminal (100) to accept installation of the new or updated application.

4. The information processing apparatus (10) according to anyone of the previous claims, wherein the control unit (14) is configured to:
determine, in a case in which the first information terminal (100) installs the application, that the installation of the application has been accepted, and/or
inquire of the first information terminal (100), in the case in which the first information terminal (100) accepts the installation of the application, whether or not to perform the application-installation prompt processing with respect to the second information terminal (200, 300), and/or
perform a control of monitoring whether or not the second information terminal (200, 300) has installed the application, and of notifying at least either one of the first information terminal (100) or the second information terminal (200, 300) of a monitoring result.

5. The information processing apparatus (10) according to anyone of the previous claims, wherein
the application includes a first application and a second application that differ from each other, and
the control unit (14) is configured to perform installation prompt processing of the first application and installation prompt processing of the second application with respect to the first information terminal (100) and the second information terminal (200, 300), respectively, and/or
the control unit (14) is configured to perform processing of guiding the second information terminal (200, 300) to install the application as the application-installation prompt processing.

6. The information processing apparatus (10) according to anyone of the previous claims, wherein the control unit (14) is configured to:
perform processing of installing the application on the second information terminal (200, 300) as the application-installation prompt processing, in particular,
notify the second information terminal (200, 300) that the application has been accepted when the application-installation prompt processing is performed.

7. The information processing apparatus (10) according to anyone of the previous claims,
wherein the control unit (14) is configured to perform setting-change-application prompt processing to apply a change to the second information terminal (200, 300) in a case in which a setting of the application installed on the first information terminal (100) is changed.

8. The information processing apparatus (10) according to claim 7, wherein the control unit (14) is configured to:
performs processing of notifying the second information terminal (200, 300) of the change as the setting-change-application prompt processing, and/or
perform processing of applying the change to the second information terminal (200, 300) as the setting-change-application prompt processing.

9. The information processing apparatus (10) according to anyone of the previous claims,
wherein the control unit (14) is configured to perform the application-installation prompt processing to prompt the installation of the application with respect to the second information terminal (200, 300) in a case in which the installation of the application is requested of the first information terminal (100) and the installation of the application is accepted by the first information terminal (100).

10. The information processing apparatus (10) according to claim 9,
wherein the first information terminal (100) is a terminal configured to authenticate a user registered in advance, and
the control unit (14) is configured to perform the application-installation prompt processing in the case in which the installation of the application is accepted by the first information terminal (100) that has authenticated the user.

11. The information processing apparatus (10) according to claim 10,
wherein the user has an administrative authority of the first information terminal (100) and the second information terminal (200, 300).

12. An information processing method for an information processing apparatus (10) connected to a network (500), the method comprising:
performing, in a case in which installation of an application is accepted by a first information terminal (100) connected to the network (500), application-installation prompt processing to prompt the installation of the application with respect to a second information terminal (200, 300) connected to the network (500), wherein:
in a case in which a new device (400) connectable to the network (500) is connected to the network (500), detecting the new device (400), and requesting the first information terminal (100) to accept the installation of the application relating to the new device (400) in a case in which the new device (400) is detected, and
performing, in the case in which the new device (400) is detected, a control of notifying at least one of the first information terminal (100) or the second information terminal (200, 300) that the new device (400) is detected.

13. A program comprising instruction which, when executed by a computer, cause the computer to carry out the method according to claim 12.

## Patentansprüche

1. Informationsverarbeitungseinrichtung (10), die mit einem Netz (500) verbunden ist, wobei die Informationsverarbeitungseinrichtung (10) umfasst:
eine Steuerungseinheit (14), die dafür ausgelegt ist, falls die Installation einer Anwendung von einem ersten Informationsendgerät (100), das mit dem Netz (500) verbunden ist, akzeptiert wird, die Verarbeitung einer Anwendungsinstallation-Aufforderung durchzuführen, um zur Installation der Anwendung in Bezug auf ein zweites Informationsendgerät (200, 300) aufzufordern, das mit dem Netz (500) verbunden ist,
wobei die Steuerungseinheit (14) ausgelegt ist zum:
in der Lage sein, falls eine neue Vorrichtung (400), die mit dem Netz (500) verbunden werden kann, mit dem Netz (500) verbunden ist, die neue Vorrichtung (400) zu erkennen und das erste Informationsendgerät (100) aufzufordern, die Installation der Anwendung in Bezug auf die neue Vorrichtung (400) zu akzeptieren, falls die neue Vorrichtung (400) erkannt wird, und
Durchführen, falls die neue Vorrichtung (400) erkannt wird, einer Steuerung des Benachrichtigens von wenigstens einem von dem ersten Informationsendgerät (100) oder dem zweiten Informationsendgerät (200, 300), dass die neue Vorrichtung (400) erkannt wird.

2. Informationsverarbeitungseinrichtung (10) gemäß Anspruch 1, wobei
das Netz (500) eine erste Netzgruppe (500-1) und eine zweite Netzgruppe (500-2) beinhaltet,
das erste Informationsendgerät (100) mit der ersten Netzgruppe (500-1) verbunden ist,
das zweite Informationsendgerät (200, 300) mit der zweiten Netzgruppe (500-2) verbunden ist,
und
die Steuerungseinheit (14) dafür ausgelegt ist, die neue Vorrichtung (400) zu erkennen, falls die neue Vorrichtung (400) mit der zweiten Netzgruppe (500-2) verbunden ist, und das erste Informationsendgerät (100) aufzufordern, die Installation der Anwendung in Bezug auf die neue Vorrichtung (400) zu akzeptieren.

3. Informationsverarbeitungseinrichtung (10) gemäß Anspruch 1 oder 2,
wobei die Steuerungseinheit (14) dafür ausgelegt ist, nach einer Anwendung in Bezug auf die neue Vorrichtung (400) in einem anderen Netz (600) zu suchen, und falls eine neue oder aktualisierte Anwendung als Anwendung in Bezug auf die neue Vorrichtung (400) gefunden wird, ist die Steuerungseinheit (14) dafür ausgelegt, das erste Informationsendgerät (100) aufzufordern, die Installation der neuen oder aktualisierten Anwendung zu akzeptieren.

4. Informationsverarbeitungseinrichtung (10) gemäß einem der vorstehenden Ansprüche, wobei die Steuerungseinheit (14) ausgelegt ist zum:
Bestimmen, falls das erste Informationsendgerät (100) die Anwendung installiert, dass die Installation der Anwendung akzeptiert worden ist und/oder
Anfragen bei dem ersten Informationsendgerät (100), falls das erste Informationsendgerät (100) die Installation der Anwendung akzeptiert, ob die Verarbeitung der Anwendungsinstallation-Aufforderung in Bezug auf das zweite Informationsendgerät (200, 300) durchgeführt werden soll oder nicht, und/oder
Durchführen einer Steuerung des Überwachens, ob das zweite Informationsendgerät (200, 300) die Anwendung installiert hat oder nicht, und des Benachrichtigens von wenigstens einem von dem ersten Informationsendgerät (100) oder dem zweiten Informationsendgerät (200, 300) über ein Überwachungsergebnis.

5. Informationsverarbeitungseinrichtung (10) gemäß einem der vorstehenden Ansprüche, wobei die Anwendung eine erste Anwendung und eine zweite Anwendung beinhaltet, die sich voneinander unterscheiden,
und
die Steuerungseinheit (14) dafür ausgelegt ist, eine Installationsaufforderungsverarbeitung der ersten Anwendung und eine Installationsaufforderungsverarbeitung der zweiten Anwendung in Bezug auf das erste Informationsendgerät (100) bzw. das zweite Informationsendgerät (200, 300) durchzuführen, und/oder
die Steuerungseinheit (14) dafür ausgelegt ist, eine Verarbeitung des Führens des zweiten Informationsendgeräts (200, 300) durchzuführen, um die Anwendung beim Verarbeiten der Anwendungsinstallation-Aufforderung zu installieren.

6. Informationsverarbeitungseinrichtung (10) gemäß einem der vorstehenden Ansprüche, wobei die Steuerungseinheit (14) ausgelegt ist zum:
Durchführen der Verarbeitung des Installierens der Anwendung auf dem zweiten Informationsendgerät (200, 300) beim Verarbeiten der Anwendungsinstallation-Aufforderung, insbesondere,
Benachrichtigen des zweiten Informationsendgeräts (200, 300), dass die Anwendung akzeptiert worden ist, wenn die Verarbeitung der Anwendungsinstallation-Aufforderung durchgeführt wird.

7. Informationsverarbeitungseinrichtung (10) gemäß einem der vorstehenden Ansprüche,
wobei die Steuerungseinheit (14) dafür ausgelegt ist, die Verarbeitung einer Einstellungsänderungsanwendung-Aufforderung durchzuführen, um eine Änderung des zweiten Informationsendgeräts (200, 300) anzuwenden, falls eine Einstellung der Anwendung, die auf dem ersten Informationsendgerät (100) installiert ist, geändert wird.

8. Informationsverarbeitungseinrichtung (10) gemäß 7, wobei die Steuerungseinheit (14) ausgelegt ist zum:
Durchführen einer Verarbeitung des Benachrichtigens des zweiten Informationsendgeräts (200, 300) über die Änderung bei Verarbeitung der Einstellungsänderungsanwendung-Aufforderung und/oder
Durchführen einer Verarbeitung des Anwendens der Änderung auf das zweite Informationsendgerät (200, 300) bei Verarbeitung der Einstellungsänderungsanwendung-Aufforderung.

9. Informationsverarbeitungseinrichtung (10) gemäß einem der vorstehenden Ansprüche, wobei die Steuerungseinheit (14) dafür ausgelegt ist, die Verarbeitung der Anwendungsinstallation-Aufforderung durchzuführen, um zur Installation der Anwendung in Bezug auf das zweite Informationsendgerät (200, 300) aufzufordern, falls die Installation der Anwendung von dem ersten Informationsendgerät (100) angefordert wird und die Installation der Anwendung von dem ersten Informationsendgerät (100) akzeptiert wird.

10. Informationsverarbeitungseinrichtung (10) gemäß Anspruch 9,
wobei das erste Informationsendgerät (100) ein Endgerät ist, das dafür ausgelegt ist, einen vorab registrierten Benutzer zu authentifizieren, und
die Steuerungseinheit (14) dafür ausgelegt ist, die Verarbeitung der Anwendungsinstallation-Aufforderung durchzuführen, falls die Installation der Anwendung von dem ersten Informationsendgerät (100), das den Benutzer authentifiziert hat, akzeptiert wird.

11. Informationsverarbeitungseinrichtung (10) gemäß Anspruch 10.
wobei der Benutzer eine administrative Autorität des ersten Informationsendgeräts (100) und des zweiten Informationsendgeräts (200, 300) hat.

12. Informationsverarbeitungsverfahren für eine Informationsverarbeitungseinrichtung (10), die mit einem Netz (500) verbunden ist, wobei das Verfahren umfasst: Durchführen, falls die Installation einer Anwendung von einem ersten Informationsendgerät (100), das mit dem Netz (500) verbunden ist, akzeptiert wird, der Verarbeitung einer Anwendungsinstallation-Aufforderung, um die Installation der Anwendung in Bezug auf ein zweites Informationsendgerät (200, 300), das mit dem Netz (500) verbunden ist, anzufordern, wobei:
falls eine neue Vorrichtung (400), die mit dem Netz (500) verbunden werden kann, mit dem Netz (500) verbunden ist, die neue Vorrichtung (400) erkannt wird und das erste Informationsendgerät (100) aufgefordert wird, die Installation der Anwendung in Bezug auf die neue Vorrichtung (400) zu akzeptieren, falls die neue Vorrichtung (400) erkannt wird, und
Durchführen, falls die neue Vorrichtung (400) erkannt wird, einer Steuerung des Benachrichtigens von wenigstens einem von dem ersten Informationsendgerät (100) oder dem zweiten Informationsendgerät (200, 300), dass die neue Vorrichtung (400) erkannt wird.

13. Programm, umfassend Anweisungen, die, wenn sie von einem Computer ausgeführt werden, den Computer veranlassen, das Verfahren gemäß Anspruch 12 auszuführen.

## Revendications

1. Appareil de traitement d'informations (10) connecté à un réseau (500), l'appareil de traitement d'informations (10) comprenant :
une unité de contrôle (14) configurée pour réaliser, si une installation d'une application est acceptée par un premier terminal d'information (100) connecté au réseau (500), un traitement d'invitation à une installation d'application pour inviter à l'installation de l'application par rapport à un second terminal d'information (200, 300) connecté au réseau (500),
l'unité de contrôle (14) étant configurée pour :
être capable, si un nouveau dispositif (400) connectable au réseau (500) est connecté au réseau (500), de détecter le nouveau dispositif (400) et de demander au premier terminal d'information (100) d'accepter l'installation de l'application relative au nouveau dispositif (400) si le nouveau dispositif (400) est détecté, et
réaliser, si le nouveau dispositif (400) est détecté, un contrôle pour notifier au premier terminal d'information (100) et/ou au second terminal d'information (200, 300) que le nouveau dispositif (400) est détecté.

2. Appareil de traitement d'informations (10) selon la revendication 1, dans lequel :
le réseau (500) inclut un premier groupe de réseaux (500-1) et un second groupe de réseaux (500-2),
le premier terminal d'information (100) est connecté au premier groupe de réseaux (500-1),
le second terminal d'information (200, 300) est connecté au second groupe de réseaux (500-2), et
l'unité de contrôle (14) est configurée pour détecter le nouveau dispositif (400) si le nouveau dispositif (400) est connecté au second groupe de réseaux (500-2) et pour demander au premier terminal d'information (100) d'accepter l'installation de l'application relative au nouveau dispositif (400).

3. Appareil de traitement d'informations (10) selon la revendication 1 ou 2, dans lequel :
l'unité de contrôle (14) est configurée pour rechercher une application relative au nouveau dispositif (400) sur un autre réseau (600), et si une nouvelle application ou une application mise à jour est trouvée en guise d'application relative au nouveau dispositif (400), l'unité de contrôle (14) est configurée pour demander au premier terminal d'information (100) d'accepter l'installation de la nouvelle application ou de l'application mise à jour.

4. Appareil de traitement d'informations (10) selon l'une quelconque des revendications précédentes, dans lequel l'unité de contrôle (14) est configurée pour :
déterminer, si le premier terminal d'information (100) installe l'application, que l'installation de l'application a été acceptée, et/ou
demander au premier terminal d'information (100), si le premier terminal d'information (100) accepte l'installation de l'application, s'il faut ou non réaliser le traitement d'invitation à une installation d'application par rapport au second terminal d'information (200, 300), et/ou
réaliser un contrôle pour surveiller si le second terminal d'information (200, 300) a installé ou non l'application et pour notifier un résultat de surveillance au premier terminal d'information (100) et/ou au second terminal d'information (200, 300).

5. Appareil de traitement d'informations (10) selon l'une quelconque des revendications précédentes, dans lequel :
l'application inclut une première application et une seconde application qui diffèrent l'une de l'autre, et
l'unité de contrôle (14) est configurée pour réaliser un traitement d'invitation à une installation de la première application et un traitement d'invitation à une installation de la seconde application par rapport respectivement au premier terminal d'information (100) et au second terminal d'information (200, 300), et/ou
l'unité de contrôle (14) est configurée pour réaliser un traitement consistant à guider le second terminal d'information (200, 300) pour installer l'application en guise de traitement d'invitation à une installation d'application.

6. Appareil de traitement d'informations (10) selon l'une quelconque des revendications précédentes, dans lequel l'unité de contrôle (14) est configurée pour :
en particulier, réaliser un traitement consistant à installer l'application sur le second terminal d'information (200, 300) en guise de traitement d'invitation à une installation d'application, et
notifier au second terminal d'information (200, 300) que l'application a été acceptée quand le traitement d'invitation à une installation d'application est réalisé.

7. Appareil de traitement d'informations (10) selon l'une quelconque des revendications précédentes, dans lequel :
l'unité de contrôle (14) est configurée pour réaliser un traitement d'invitation à une application de modification de réglage pour appliquer une modification au second terminal d'information (200, 300) si un réglage de l'application installée sur le premier terminal d'information (100) est modifié.

8. Appareil de traitement d'informations (10) selon la revendication 7, dans lequel l'unité de contrôle (14) est configurée pour :
réaliser un traitement consistant à notifier la modification au second terminal d'information (200, 300) en guise de traitement d'invitation à une application de modification de réglage, et/ou
réaliser un traitement consistant à appliquer la modification au second terminal d'information (200, 300) en guise de traitement d'invitation à une application de modification de réglage.

9. Appareil de traitement d'informations (10) selon l'une quelconque des revendications précédentes, dans lequel :
l'unité de contrôle (14) est configurée pour réaliser le traitement d'invitation à une installation d'application pour inviter à l'installation de l'application par rapport au second terminal d'information (200, 300) si l'installation de l'application est demandée pour le premier terminal d'information (100) et si l'installation de l'application est acceptée par le premier terminal d'information (100).

10. Appareil de traitement d'informations (10) selon la revendication 9, dans lequel :
le premier terminal d'information (100) est un terminal configuré pour authentifier un utilisateur enregistré à l'avance, et
l'unité de contrôle (14) est configurée pour réaliser le traitement d'invitation à une installation d'application si l'installation de l'application est acceptée par le premier terminal d'information (100) qui a authentifié l'utilisateur.

11. Appareil de traitement d'informations (10) selon la revendication 10, dans lequel :
l'utilisateur à une autorité d'administration du premier terminal d'information (100) et du second terminal d'information (200, 300).

12. Procédé de traitement d'informations pour un appareil de traitement d'informations (10) connecté à un réseau (500), le procédé comprenant l'étape consistant à :
réaliser, si une installation d'une application est acceptée par un premier terminal d'information (100) connecté au réseau (500), un traitement d'invitation à une installation d'application pour inviter à l'installation de l'application par rapport à un second terminal d'information (200, 300) connecté au réseau (500),
le procédé comprenant en outre les étapes consistant à :
si un nouveau dispositif (400) connectable au réseau (500) est connecté au réseau (500), détecter le nouveau dispositif (400) et demander au premier terminal d'information (100) d'accepter l'installation de l'application relative au nouveau dispositif (400) si le nouveau dispositif (400) est détecté, et
réaliser, si le nouveau dispositif (400) est détecté, un contrôle pour notifier au premier terminal d'information (100) et/ou au second terminal d'information (200, 300) que le nouveau dispositif (400) est détecté.

13. Programme comprenant une instruction qui, lorsqu'elle est exécutée par un ordinateur, amène l'ordinateur à exécuter le procédé selon la revendication 12.
